# EUROPEAN PATENT APPLICATION

(11) **EP 4 642 007 A1**
(43) Date of publication of application: **29.10.2025**
(21) Application number: 24464005.8
(22) Date of filing: 22.04.2024
(51) Int. Cl.: H04L 65/4061, G08G 5/00, H04L 65/80, H04L 69/00, H04L 65/65

(54) **A COMMUNICATION SYSTEM FOR AIR TRAFFIC CONTROL AND METHODS OF OPERATING THE SAME**

(71) Applicant: Rohde & Schwarz GmbH & Co. KG, 81671 München (DE)
(72) Inventor: Bica, Dumitru, 020335 Bucharest (RO)
(74) Representative: Rupp, Christian

(57) **Abstract**

Disclosed is a communication system (*1, 2*) for air traffic control, ATC. The system (*1*, *2)* comprises a voice communication system, VCS (*1*)*,* including a controller working position, CWP (*11*); and a ground radio station, GRS (*2*), being configured to transceive audio communication. The VCS (*1*) and the GRS (*2*) are connectable via a real-time transport protocol, RTP, connection. The VCS (*1*) is configured to send (*32*) at least one first RTP packet (5) to the GRS (*2*) in response to a push of a push-to-talk, PTT, button at the CWP (*11*). A payload of the respective first RTP packet (*5*) consists of an RTP Header Extension. The RTP Header Extension of the respective first RTP packet (*5*) comprises a PTT-ON information being used to indicate a radio frequency, RF, transmission at the GRS (*2*)*.* This avoids clipping or loss of syllable in VoIP networks with countrywide installations.

## Description

### Technical Field

The present disclosure relates generally to the field of voice communication for air traffic control (ATC), and in particular to a corresponding communication system and methods of operating the same.

### Background Art

Ground radio station (GRS) endpoints of Air Traffic Services Ground Voice Networks (AGVN) normally require 5-10 ms (or even more) to put a carrier on air after reception of a PTT-ON (push-to-talk) command from a Voice Communication System (VCS) endpoint. In case of VoIP networks with countrywide installations this might lead to clipping or loss of syllable.

### Summary

It is an object to overcome the above-mentioned and other drawbacks.

The foregoing and other objects are achieved by the features of the independent claims. Further implementation forms are apparent from the dependent claims, the description and the figures.

According to a first aspect, a communication system for air traffic control, ATC, is provided. The system comprises a voice communication system, VCS, including a controller working position, CWP; and a ground radio station, GRS, being configured to transceive audio communication. The VCS and the GRS are connectable via a real-time transport protocol, RTP, connection. The VCS is configured to send at least one first RTP packet to the GRS in response to a push of a push-to-talk, PTT, button at the CWP. A payload of the respective first RTP packet consists of an RTP Header Extension. The RTP Header Extension of the respective first RTP packet comprises a PTT-ON information being used to indicate a radio frequency, RF, transmission at the GRS.

The GRS may be configured to activate a carrier of the RF transmission at the GRS in response to a reception of the respective first RTP packet from the VCS.

The VCS may further be configured to send a second RTP packet following the at least one first RTP packet to the GRS in response to the push of the PTT button at the CWP. A payload of the second RTP packet comprises an RTP Header Extension and an audio payload. The RTP Header Extension of the second RTP packet comprises a PTT-ON information being used to indicate the RF transmission at the GRS.

The GRS may further be configured to transmit audio communication according to the audio payload via the activated carrier in response to a reception of the second RTP packet from the VCS.

The GRS may further be configured to send at least one third RTP packet to the VCS in response to an RF reception at the GRS. A payload of the respective third RTP packet consists of an RTP Header Extension. The RTP Header Extension of the respective third RTP packet comprises a SQUELCH-ON information used to indicate the RF reception at the GRS.

The GRS may further be configured to send a fourth RTP packet following the at least one third RTP packet to the VCS in response to the RF reception at the GRS. A payload of the fourth RTP packet comprises an RTP Header Extension and an audio payload. The RTP Header Extension of the fourth RTP packet comprises a SQUELCH-ON information used to indicate the RF reception at the GRS.

The RF reception at the GRS may exceed a given threshold of at least a receiver sensitivity.

According to a second aspect, a method of operating a communication system for air traffic control, ATC, is provided. The system comprises a voice communication system, VCS, including a controller working position, CWP; and a ground radio station, GRS, being configured to transceive audio communication. The method comprises establishing a real-time transport protocol, RTP, connection between the VCS and the GRS; and sending at least one first RTP packet from the VCS to the GRS in response to a push of a push-to-talk, PTT, button at the CWP. A payload of the respective first RTP packet consists of an RTP Header Extension. The RTP Header Extension of the respective first RTP packet comprises a PTT-ON information being used to indicate a radio frequency, RF, transmission at the GRS.

The method may further comprise activating a carrier of the RF transmission at the GRS in response to a reception of the respective first RTP packet from the VCS.

The method may further comprise sending a second RTP packet following the at least one first RTP packet from the VCS to the GRS in response to the push of the PTT button at the CWP. A payload of the second RTP packet comprises an RTP Header Extension and an audio payload. The RTP Header Extension of the second RTP packet comprises a PTT-ON information being used to indicate the RF transmission at the GRS.

The method may further comprise transmitting audio communication according to the audio payload via the activated carrier in response to a reception of the second RTP packet from the VCS.

According to a third aspect, a method of operating a communication system for air traffic control, ATC, is provided. The system comprises a voice communication system, VCS, including a controller working position, CWP; and a ground radio station, GRS, being configured to transceive audio communication. The method comprises establishing a real-time transport protocol, RTP, connection between the VCS and the GRS; and sending at least one third RTP packet from the GRS to the VCS in response to an RF reception at the GRS. A payload of the respective third RTP packet consists of an RTP Header Extension. The RTP Header Extension of the respective third RTP packet comprises a SQUELCH-ON information used to indicate the RF reception at the GRS.

The method may further comprise sending a fourth RTP packet following the at least one third RTP packet from the GRS to the VCS in response to the RF reception at the GRS. A payload of the fourth RTP packet comprises an RTP Header Extension and an audio payload. The RTP Header Extension of the fourth RTP packet comprises a SQUELCH-ON information used to indicate the RF reception at the GRS.

### Advantageous Effects

Whenever operating staff pushes a push-to-talk (PTT) button, the VCS will instantly send at least one first RTP packet, such as one or two first RTP packets, with PTT-ON information but without audio payload to the GRS, In this way, the GRS may already start to activate the carrier and when a second RTP packet with PTT-ON information *and* audio payload is received, the radio is on air and can immediately transmit audio communication according to the audio payload. This avoids clipping or loss of syllable.

A similar signaling without audio payload is proposed in reverse direction (i.e., from GRS to VCS) as well.

### Brief Description of Drawings

The above-described aspects and implementations will now be explained with reference to the accompanying drawings, in which the same or similar reference numerals designate the same or similar elements.

The drawings are to be regarded as being schematic representations, and elements illustrated in the drawings are not necessarily shown to scale. Rather, the various elements are represented such that their function and general purpose become apparent to those skilled in the art.
- FIG. 1: illustrates a communication system in accordance with the present disclosure;
- FIGs. 2 - 3: illustrate methods of operating the communication system of FIG. 1 in accordance with the present disclosure; and
- FIGs. 4-7: schematically illustrate first, second, third and fourth RTP packets in accordance with the present disclosure.

### Detailed Descriptions of Drawings

In the following description, reference is made to the accompanying drawings, which form part of the disclosure, and which show, by way of illustration, specific aspects of implementations of the present disclosure or specific aspects in which implementations of the present disclosure may be used. It is understood that implementations of the present disclosure may be used in other aspects and comprise structural or logical changes not depicted in the figures. The following detailed description, therefore, is not to be taken in a limiting sense, and the scope of the present disclosure is defined by the appended claims.

For instance, it is understood that a disclosure in connection with a described method may also hold true for a corresponding apparatus or system configured to perform the method and vice versa. For example, if one or a plurality of specific method steps are described, a corresponding device may include one or a plurality of units, e.g. functional units, to perform the described one or plurality of method steps (e.g. one unit performing the one or plurality of steps, or a plurality of units each performing one or more of the plurality of steps), even if such one or more units are not explicitly described or illustrated in the figures. On the other hand, for example, if a specific apparatus is described based on one or a plurality of units, e.g. functional units, a corresponding method may include one step to perform the functionality of the one or plurality of units (e.g. one step performing the functionality of the one or plurality of units, or a plurality of steps each performing the functionality of one or more of the plurality of units), even if such one or plurality of steps are not explicitly described or illustrated in the figures. Further, it is understood that the features of the various exemplary implementations and/or aspects described herein may be combined with each other, unless specifically noted otherwise.

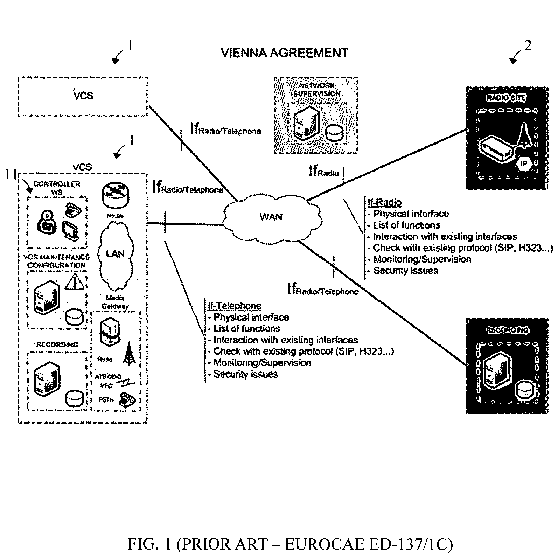

FIG. 1 illustrates a communication system *1, 2* in accordance with the present disclosure.

The communication system *1, 2* is particularly suitable for air traffic control (ATC).

Air traffic control (or ATC) as used herein may refer to a service provided by ground-based air traffic controllers who direct aircraft on the ground and through a given section of controlled airspace, and can provide advisory services to aircraft in non-controlled airspace.

The system *1*, *2* comprises a voice communication system, VCS *1* including a controller working position, CWP *11*; and a ground radio station, GRS *2,* being configured to transceive audio communication.

A voice communication system (or VCS) as used herein may refer to a main equipment providing radio (and telephone) facilities to the controller working position.

A controller working position (or CWP) as used herein may refer to all the human-machine interface components (i.e. radio, telephone and radar facilities etc.) as may be required by members of operating staff in carrying out their operational duties.

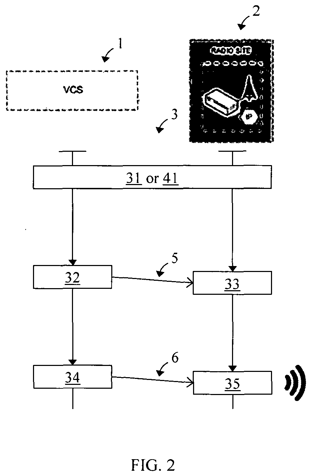

Note that both the VCS *1* and the GRS *2* imply digital processing capability in the form of a CPU, NPU, FPGA, ASIC or the like, configured to perform the methods *3, 4* explained in connection with FIGs. 2 - 3 below.

The VCS *1* and the GRS *2* are connectable via a real-time transport protocol, RTP (see RFC 3550), connection.

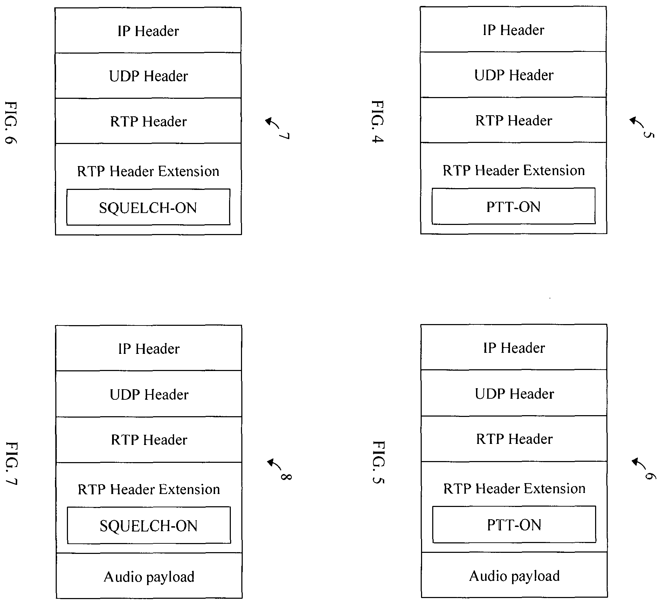

Note that this implies encapsulation of packets of said RTP connection by User Datagram Protocol (UDP, see RFC 768) and Internet Protocol (IP, see RFCs 791, 8200) as schematically illustrated in FIGs. 5-7 below.

Turning to FIG. 2, the VCS *1* and the GRS *2* are configured to establish *31* a real-time transport protocol, RTP, connection between themselves.

The VCS *1* is further configured to send *32* at least one first RTP packet *5* to the GRS *2* in response to a push of a push-to-talk, PTT, button at the CWP *11*.

Push-to-talk (or PTT) as used herein may refer to a physical action taken by members of operating staff in operating their transmit button.

A button as used herein may refer to any type of input device of a human-machine interface including buttons, keys, levers, foot switches, computer mouse, LCD/Plasma panel segments etc.

A schematic example of the respective first RTP packet 5 is illustrated in FIG. 6.

The respective first RTP packet *5* is encapsulated by IP and UDP and comprises a header and a payload.

The payload of the respective first RTP packet *5* consists of an RTP Header Extension. In other words, the payload of the respective first RTP packet *5* does not comprise any audio payload.

A payload of a packet as used herein may refer to any data following a basic header of said packet.

The RTP Header Extension of the respective first RTP packet *5* comprises a PTT-ON information being used to indicate a radio frequency, RF, transmission at the GRS 2.

Returning to FIG. 2, the GRS 2 may be configured to activate *33* a carrier of the RF transmission at the GRS 2 in response to a reception of the respective first RTP packet *5* from the VCS *1.*

The VCS *1* may further be configured to send *34* a second RTP packet *6* following the at least one first RTP packet *5* to the GRS *2* in response to the push of the PTT button at the CWP *11*.

A schematic example of the second RTP packet *6* is illustrated in FIG. 5.

The second RTP packet *6* is also encapsulated by IP and UDP and comprises a header and a payload.

The payload of the second RTP packet *6* comprises an RTP Header Extension as well as an audio payload.

The RTP Header Extension of the second RTP packet *6* comprises a PTT-ON information being used to indicate the RF transmission at the GRS *2.*

Returning to FIG. 2, the GRS *2* may further be configured to transmit *35* audio communication according to the audio payload via the activated carrier in response to a reception of the second RTP packet *6* from the VCS *1.*

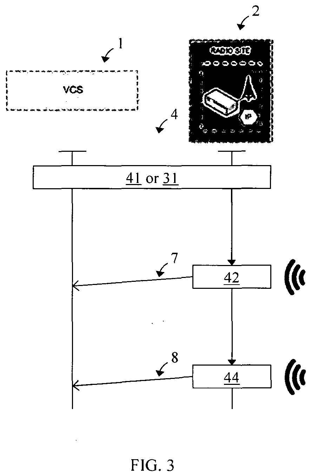

Turning to FIG. 3, the GRS *2* may further be configured to send *42* at least one third RTP packet *7* to the VCS *1* in response to an RF reception at the GRS *2.*

The RF reception at the GRS *2* may exceed a given threshold of at least a receiver sensitivity (or a higher threshold in terms of received power).

A schematic example of the respective third RTP packet *7* is illustrated in FIG. 6.

The respective third RTP packet *7* is also encapsulated by IP and UDP and comprises a header and a payload.

The payload of the respective third RTP packet *7* consists of an RTP Header Extension.

That is to say, the payload of the respective third RTP packet *7* does not comprise any audio payload.

The RTP Header Extension of the respective third RTP packet *7* comprises a SQUELCH-ON information used to indicate the RF reception at the GRS *2.*

Returning to FIG. 3, the GRS *2* may further be configured to send *44* a fourth RTP packet *8* following the at least one third RTP packet *7* to the VCS *1* in response to the RF reception at the GRS *2.*

A schematic example of the fourth RTP packet 8 is illustrated in FIG. 7.

The fourth RTP packet *8* is also encapsulated by IP and UDP and comprises a header and a payload.

The payload of the fourth RTP packet *8* comprises an RTP Header Extension and an audio payload. The RTP Header Extension of the fourth RTP packet *8* comprises a SQUELCH-ON information used to indicate the RF reception at the GRS 2.

FIGs. 2 - 3 illustrate methods 3, 4 of operating the communication system 1, 2 of FIG. 1 in accordance with the present disclosure.

Both methods *3, 4* relate to a same communication system *1, 2* for air traffic control, ATC. As illustrated in FIG. 1, the system *1, 2* comprises a voice communication system, VCS *1,* including a controller working position, CWP *11*; and a ground radio station, GRS *2,* being configured to transceive audio communication.

The method 3 illustrated in FIG. 2 relates to a radio frequency, RF, transmission at the GRS 2, and comprises establishing *31* a real-time transport protocol, RTP, connection between the VCS *1* and the GRS *2;* and sending *32* at least one first RTP packet *5* from the VCS *1* to the GRS *2* in response to a push of a push-to-talk, PTT, button at the CWP *11*.

With reference to FIG. 4, a payload of the respective first RTP packet *5* (of the at least one RTP packet 5) consists of an RTP Header Extension. The RTP Header Extension of the respective first RTP packet *5* comprises a PTT-ON information being used to indicate the RF transmission at the GRS 2.

Returning to FIG. 2, the method *3* may further comprise activating *33* a carrier of the RF transmission at the GRS *2* in response to a reception of the respective first RTP packet *5* from the VCS *1.*

The method *3* may further comprise sending *34* a second RTP packet *6* following the at least one first RTP packet 5 from the VCS *1* to the GRS *2* in response to the push of the PTT button at the CWP *11*.

With reference to FIG. 5, a payload of the second RTP packet *6* comprises an RTP Header Extension and an audio payload. The RTP Header Extension of the second RTP packet *6* comprises a PTT-ON information being used to indicate the RF transmission at the GRS *2.*

Returning to FIG. 2, the method *3* may further comprise transmitting *35* audio communication according to the audio payload via the activated carrier in response to a reception of the second RTP packet *6* from the VCS *1.*

The method *4* illustrated in FIG. 3 relates to an RF reception at the GRS *2,* and comprises establishing *41* the VCS *1* and the GRS *2* via a real-time transport protocol, RTP, connection; and sending *42* at least one third RTP packet *7* from the GRS *2* to the VCS *1* in response to an RF reception at the GRS *2.*

With reference to FIG. 6, a payload of the respective third RTP packet *7* consists of an RTP Header Extension. The RTP Header Extension of the respective third RTP packet *7* comprises a SQUELCH-ON information used to indicate the RF reception at the GRS *2.*

Returning to FIG. 3, the method *4* may further comprise sending *44* a fourth RTP packet *8* following the at least one third RTP packet *7* from the GRS *2* to the VCS *1* in response to the RF reception at the GRS *2.*

With reference to FIG. 7, a payload of the fourth RTP packet *8* comprises an RTP Header Extension and an audio payload. The RTP Header Extension of the fourth RTP packet *8* comprises a SQUELCH-ON information used to indicate the RF reception at the GRS 2.

FIGs. 4-7 schematically illustrate the previously mentioned first, second, third and fourth RTP packets 5, 6, 7, 8 in accordance with the present disclosure.

The present disclosure has been described in conjunction with various implementations as examples. However, other variations can be understood and effected by those persons skilled in the art and practicing the claimed matter, from the studies of the drawings, this disclosure and the independent claims. In the claims as well as in the description the word "comprising" does not exclude other elements or steps and the indefinite article "a" or "an" does not exclude a plurality. A single element or other unit may fulfill the functions of several entities or items recited in the claims. The mere fact that certain measures are recited in the mutual different dependent claims does not indicate that a combination of these measures cannot be used in an advantageous implementation. A computer program may be stored/distributed on a suitable medium, such as an optical storage medium or a solid-state medium supplied together with or as part of other hardware, but may also be distributed in other forms, such as via the Internet or other wired or wireless telecommunication systems.

## Claims

1. A communication system (1, 2) for air traffic control, ATC, the system (1, 2) comprising
- a voice communication system, VCS (1), including a controller working position, CWP (11); and
- a ground radio station, GRS (2), being configured to transceive audio communication;
the VCS (1) and the GRS (2) being connectable via a real-time transport protocol, RTP, connection; the VCS (1) being configured to send (32) at least one first RTP packet (5) to the GRS (2) in response to a push of a push-to-talk, PTT, button at the CWP (11),
a payload of the respective first RTP packet (5) consisting of an RTP Header Extension,
the RTP Header Extension of the respective first RTP packet (5) comprising a PTT-ON information being used to indicate a radio frequency, RF, transmission at the GRS (2).

2. The communication system (1, 2) of claim 1,
the GRS (2) being configured to activate (33) a carrier of the RF transmission at the GRS (2) in response to a reception of the respective first RTP packet (5) from the VCS (1).

3. The communication system (1, 2) of claim 1 or claim 2,
the VCS (1) further being configured to send (34) a second RTP packet (6) following the at least one first RTP packet (5) to the GRS (2) in response to the push of the PTT button at the CWP (11),
a payload of the second RTP packet (6) comprising an RTP Header Extension and an audio payload,
the RTP Header Extension of the second RTP packet (6) comprising a PTT-ON information being used to indicate the RF transmission at the GRS (2).

4. The communication system (1, 2) of claim 3,
the GRS (2) further being configured to transmit (35) audio communication according to the audio payload via the activated carrier in response to a reception of the second RTP packet (6) from the VCS (1).

5. The communication system (1, 2) of any one of the preceding claims,
the GRS (2) further being configured to send (42) at least one third RTP packet (7) to the VCS (1) in response to an RF reception at the GRS (2),
a payload of the respective third RTP packet (7) consisting of an RTP Header Extension, the RTP Header Extension of the respective third RTP packet (7) comprising a SQUELCH-ON information used to indicate the RF reception at the GRS (2).

6. The communication system (1, 2) of claim 5,
the GRS (2) further being configured to send (44) a fourth RTP packet (8) following the at least one third RTP packet (7) to the VCS (1) in response to the RF reception at the GRS (2),
a payload of the fourth RTP packet (8) comprising an RTP Header Extension and an audio payload,
the RTP Header Extension of the fourth RTP packet (8) comprising a SQUELCH-ON information used to indicate the RF reception at the GRS (2).

7. The communication system (1, 2) of claim 5 or claim 6,
the RF reception at the GRS (2) exceeding a given threshold of at least a receiver sensitivity.

8. A method (3) of operating a communication system (1, 2) for air traffic control, ATC,
the system (1, 2) comprising
- a voice communication system, VCS (1), including a controller working position, CWP (11); and
- a ground radio station, GRS (2), being configured to transceive audio communication;
the method (3) comprising
- establishing (31) a real-time transport protocol, RTP, connection between the VCS (1) and the GRS (2); and
- sending (32) at least one first RTP packet (5) from the VCS (1) to the GRS (2) in response to a push of a push-to-talk, PTT, button at the CWP (11),
a payload of the respective first RTP packet (5) consisting of an RTP Header Extension,
the RTP Header Extension of the respective first RTP packet (5) comprising a PTT-ON information being used to indicate a radio frequency, RF, transmission at the GRS (2).

9. The method (3) of claim 8, further comprising
- activating (33) a carrier of the RF transmission at the GRS (2) in response to a reception of the respective first RTP packet (5) from the VCS (1).

10. The method (3) of claim 8 or claim 9, further comprising
- sending (34) a second RTP packet (6) following the at least one first RTP packet (5) from the VCS (1) to the GRS (2) in response to the push of the PTT button at the CWP (11),
a payload of the second RTP packet (6) comprising an RTP Header Extension and an audio payload,
the RTP Header Extension of the second RTP packet (6) comprising a PTT-ON information being used to indicate the RF transmission at the GRS (2).

11. The method (3) of claim 10, further comprising
- transmitting (35) audio communication according to the audio payload via the activated carrier in response to a reception of the second RTP packet (6) from the VCS (1).

12. A method (4) of operating a communication system (1, 2) for air traffic control, ATC,
the system (1, 2) comprising
- a voice communication system, VCS (1), including a controller working position, CWP (11); and
- a ground radio station, GRS (2), being configured to transceive audio communication;
the method (4) comprising
- establishing (41) a real-time transport protocol, RTP, connection between the VCS (1) and the GRS (2); and
- sending (42) at least one third RTP packet (7) from the GRS (2) to the VCS (1) in response to an RF reception at the GRS (2),
a payload of the respective third RTP packet (7) consisting of an RTP Header Extension,
the RTP Header Extension of the respective third RTP packet (7) comprising a SQUELCH-ON information used to indicate the RF reception at the GRS (2).

13. The method (4) of claim 12, further comprising
- sending (44) a fourth RTP packet (8) following the at least one third RTP packet (7) from the GRS (2) to the VCS (1) in response to the RF reception at the GRS (2),
a payload of the fourth RTP packet (8) comprising an RTP Header Extension and an audio payload,
the RTP Header Extension of the fourth RTP packet (8) comprising a SQUELCH-ON information used to indicate the RF reception at the GRS (2).
